# DEMANDE DE BREVET EUROPEEN

(11) **EP 3 109 537 A1**
(43) Date de publication de la demande: **28.12.2016**
(21) Numéro de dépôt: 16174439.6
(22) Date de dépôt: 14.06.2016
(51) Int. Cl.: F21S 8/10, F21V 23/00, F21V 25/00, H01R 13/6592

(54) **ENVELOPPE DE PROTECTION POLYMÉRIQUE POUR FAISCEAUX ÉLECTRIQUES DANS UN DISPOSITIF LUMINEUX DE VÉHICULE AUTOMOBILE**

(30) Priorité: 22.06.2015 FR 1555681
(71) Demandeur: VALEO VISION, 93012 Bobigny Cedex (FR)
(72) Inventeur: FAOUCHER, Erwan, 49240 AVRILLÉ (FR); HERMITTE, Michel, 49100 ANGERS (FR); LEVASSEUR, Stéphane, 49125 BRIOLLAY (FR)

(57) **Abrégé**

La présente invention concerne un dispositif lumineux (100, 101) de véhicule automobile comprenant au moins un module lumineux et au moins un câble électrique (10), caractérisé en ce qu'au moins une portion longitudinale dudit câble électrique (10) est entourée au moins en partie ou complétement par au moins une enveloppe de protection (20, 30), l'enveloppe de protection étant une enveloppe polymérique électriquement conductrice.

## Description

La présente invention se rapporte à un dispositif lumineux de véhicule automobile comprenant au moins un câble électrique entouré au moins en partie par une enveloppe de protection électriquement conductrice en matériau polymère.

Elle s'applique typiquement, mais non exclusivement, aux domaines des dispositifs d'éclairage et/ou de signalisation lumineuse de véhicule automobile.

L'encombrement et la proximité des différents éléments tels que les modules code, les modules route ou encore les modules code additionnel, composant les projecteurs automobiles rendent difficile la mise en place de faisceaux de câbles électriques et leur fixation aux connecteurs électriques. En outre, parmi ces éléments, certains comme les ensembles de modules et la platine support sont en mouvement en configuration opérationnelle, ce qui peut entraîner un mauvais positionnement des faisceaux électriques, voire une dégradation de ceux-ci à force de frottements.

Du document EP-2 266 845 est connu un moyen pour protéger mécaniquement en partie les faisceaux électriques à l'intérieur d'un boîtier pour projecteur automobile. Ce moyen consiste à insérer les faisceaux électriques à l'intérieur d'une gouttière réalisée en un matériau plastique rigide.

Ceci étant, la mise en place ou le montage des faisceaux électriques au sein de cette gouttière n'est pas totalement satisfaisante car l'accès aux connecteurs électriques situés dans le boîtier reste difficile.

En outre, les faisceaux électriques tels que disposés dans ces gouttières, lorsqu'ils sont soumis à une alimentation électriques, présentent l'inconvénient de générer des champs électromagnétiques influençant électro-magnétiquement les éléments électroniques internes et/ou externes au projecteur et ainsi d'altérer le fonctionnement des composants environnant à l'intérieur du boîtier pour projecteur automobile.

Le but de la présente invention est de pallier les inconvénients des techniques de l'art antérieur en proposant un dispositif lumineux de véhicule automobile comprenant au moins un câble électrique, limitant de façon significative les perturbations électriques et/ou électromagnétiques induites par le câble électrique lorsqu'il est soumis à une alimentation électrique, tout en permettant un positionnement et une connexion facilité dudit câble électrique au sein d'un boîtier pour dispositif lumineux, et notamment au sein d'un boîtier pour projecteur automobile.

La présente invention a pour objet un dispositif lumineux de véhicule automobile comprenant au moins un module lumineux et au moins un câble électrique, caractérisé en ce qu'au moins une portion longitudinale dudit câble électrique est entourée au moins en partie ou complètement par au moins une enveloppe de protection, l'enveloppe de protection étant une enveloppe polymérique électriquement conductrice.

Grâce à l'invention, le ou les câbles électriques, notamment de type faisceaux électriques, protégé(s) par l'enveloppe de protection peuvent être facilement manipulés et positionnés dans un boîtier pour dispositif lumineux, et notamment dans un boîtier pour projecteur automobile. En outre, l'enveloppe de protection permet avantageusement de limiter de façon significative, voire d'éviter, les nuisances électromagnétiques, telles que notamment les nuisances électriques, entre le ou les câble(s) électrique(s) et leur environnement, et inversement.

### Le câble électrique

Dans la présente invention, on entend par « câble électrique » un ou plusieurs élément(s) électriquement conducteur(s) allongé(s) entouré(s) par au moins une couche électriquement isolante, la couche électriquement isolante pouvant être directement en contact physique avec le ou les éléments électriquement conducteur(s) allongé(s).

Le câble électrique comprend classiquement un axe longitudinal.

L'élément électriquement conducteur allongé constitutif du câble électrique de l'invention est classiquement destiné à distribuer le courant électrique entre différents dispositifs électriques, notamment à distribuer le courant électrique à au moins un module lumineux de véhicule automobile. Plus particulièrement, le câble électrique de l'invention est destiné à être connecté, ou est connecté, à au moins un module lumineux de véhicule automobile.

L'élément électriquement conducteur allongé du câble électrique peut être typiquement un fil métallique ou une pluralité de fils métalliques, torsadé(s) ou non, notamment en cuivre et/ou en aluminium (au degré d'oxydation zéro), ou un de leurs alliages. De préférence, l'élément électriquement conducteur allongé du câble électrique est en cuivre (au degré d'oxydation zéro).

A titre d'exemple, le câble électrique peut comprendre un ou plusieurs fils électriques isolés, entouré(s) ou non par une gaine de protection.

Dans un mode de réalisation particulier, le dispositif lumineux de véhicule automobile peut comprendre au moins deux câbles électriques formant un ensemble de câbles électriques, au moins une portion longitudinale dudit ensemble étant entourée par ladite enveloppe de protection.

A titre d'exemple, ce peut être au moins deux fils conducteurs électriques isolés, ces deux fils conducteurs isolés étant entourés par l'enveloppe de protection.

Dans un autre mode de réalisation particulier, le dispositif lumineux de véhicule automobile peut comprendre au moins un faisceau de câbles électriques (i.e. faisceau électrique), au moins une portion longitudinale dudit faisceau étant entourée par ladite enveloppe de protection.

De préférence, le dispositif lumineux de véhicule automobile peut comprendre au moins deux faisceaux de câbles électriques formant un ensemble de faisceaux, au moins une portion longitudinale dudit ensemble de faisceaux étant entourée par ladite enveloppe de protection.

Dans le cadre de l'invention, le dispositif lumineux de véhicule automobile comprend en outre au moins un connecteur électrique. Ledit connecteur électrique est notamment destiné à pouvoir connecter le câble électrique à au moins un module lumineux.

Le faisceau de câbles électriques mentionné dans la description peut être plus particulièrement un ensemble de plusieurs câbles électriques comprenant un ou plusieurs connecteurs électriques. Plus particulièrement, le faisceau de câbles électriques comprend plusieurs fils électriques isolés, qui sont notamment préassemblés, dotés d'un ou de plusieurs connecteurs électriques.

### L'enveloppe de protection

Dans la présente invention, l'enveloppe de protection est une enveloppe entourant au moins en partie ou complètement au moins une portion longitudinale du ou des câbles électriques.

Dans un premier mode de réalisation, l'enveloppe de protection est une enveloppe entourant au moins en partie, et de préférence non dans sa totalité, au moins une portion longitudinale du ou des câbles électriques.

En d'autres termes, l'enveloppe de protection est une enveloppe longitudinalement ouverte sur la portion du ou des câbles électriques à protéger. Plus particulièrement, l'enveloppe de protection a une surface ouverte en section transversale. On peut parler d'enveloppe de protection ouverte.

L'enveloppe de protection ouverte est destinée à être associée à au moins une partie d'un boîtier pour dispositif lumineux, afin de former un ensemble fermé à l'intérieur duquel le ou les câbles électriques sont positionnés. L'enveloppe de protection ouverte forme ainsi avec la partie du boîtier avec laquelle elle est associée, un élément de protection entourant complètement dans sa section transversale au moins une portion longitudinale du ou des câbles électriques.

L'enveloppe de protection ouverte peut être fixée sur la surface interne du boîtier pour dispositif lumineux, par tous moyens de maintien bien connus de l'homme du métier.

De préférence, l'enveloppe de protection ouverte peut être du type exosquelette.

On entend par le terme « exosquelette » un élément extérieur (i.e. structurellement indépendant) audit(s) câble(s) électrique(s) de l'invention. L'exosquelette permet au moins en partie de supporter et de protéger mécaniquement ledit ou lesdits câble(s) électrique(s) de l'invention.

L'exosquelette peut avoir une épaisseur sensiblement constante autour du ou des câbles électriques qu'elle entoure en partie. A titre d'exemple, l'épaisseur de l'exosquelette est comprise entre 1 mm et 3,5 mm.

L'enveloppe de protection ouverte peut comprendre en outre au moins une première ouverture destinée à laisser passer au moins un connecteur électrique du câble électrique.

L'enveloppe de protection ouverte peut comprendre en outre au moins une deuxième ouverture destinée à permettre la fixation de ladite enveloppe sur la surface interne d'un boîtier pour dispositif lumineux.

Dans un deuxième mode de réalisation, l'enveloppe de protection est une enveloppe entourant complètement au moins une portion longitudinale du ou des câbles électriques.

En d'autres termes, l'enveloppe de protection est une enveloppe longitudinalement fermée sur la portion du ou des câbles électriques à protéger. Plus particulièrement, l'enveloppe de protection a une surface fermée en section transversale. On peut parler d'enveloppe de protection fermée.

L'enveloppe de protection fermée peut être fixée sur la surface interne du boîtier pour dispositif lumineux, par tous moyens de maintien bien connus de l'homme du métier, tels que par exemple par vissage, collage ou bouterollage.

De préférence, l'enveloppe de protection fermée peut être du type cylindrique, et peut avoir une épaisseur sensiblement constante tout autour du ou des câbles électriques. A titre d'exemple, l'épaisseur de la gaine est comprise entre 0,3 mm et 1,0 mm. L'enveloppe de protection peut ainsi être du type gaine de protection.

Ainsi, l'enveloppe de protection selon l'invention est bien différente de la gouttière de l'art antérieur, cette dernière n'entourant pas complètement les câbles électriques puisque la gouttière est en forme de « U » et n'est donc pas une surface dite fermée.

Dans un troisième mode de réalisation, l'enveloppe de protection peut comprendre une enveloppe de protection selon le premier mode de réalisation et une enveloppe de protection selon le deuxième mode de réalisation.

L'enveloppe de protection selon l'invention, en plus de jouer un rôle de protection mécanique, permet avantageusement de former un blindage électromagnétique autour de la zone longitudinale du ou des câbles électriques qu'elle entoure en partie ou complètement.

Ce blindage électromagnétique permet avantageusement aux composants environnant le ou les câbles électriques, d'être protégés des champs électromagnétiques pouvant être générés par le ou les câbles électriques lorsqu'ils sont parcourus par un courant électrique. Il permet également, à l'inverse, aux câbles électriques protégés par l'enveloppe de protection, d'être préservés des champs électromagnétiques pouvant être générés par les composants électriques et et/ou magnétiques environnants parcourus par des courants électriques.

La portion du ou des câbles électriques recouverte par l'enveloppe de protection a de préférence une longueur suffisante pour faire une barrière électromagnétique, notamment électrique, entre le ou les câbles électriques d'une part, et les composants environnant le ou les câbles électriques d'autre part, afin d'éviter les effets néfastes des champs électromagnétiques. En outre, les dimensions, et notamment la longueur et l'épaisseur, de l'enveloppe de protection peuvent aussi être ajustées pour optimiser la protection mécanique du ou des câbles électrique qu'elle entoure.

Dans un mode de réalisation particulier, l'enveloppe de protection de l'invention s'étend longitudinalement sur toute la longueur du ou des câbles électriques à protéger.

L'enveloppe de protection permet en outre de maintenir ensemble, et de façon continue sur la zone à protéger, plusieurs câbles électriques. De ce fait, la manipulation et l'installation de l'ensemble de câbles entouré par l'enveloppe de protection s'en trouvent grandement facilité. En outre, la fixation du ou des câbles électriques entourés par l'enveloppe de protection de l'invention sur la surface intérieure d'un boîtier pour dispositif lumineux est optimisée.

Dans un mode de réalisation particulier, l'enveloppe de protection est une enveloppe dite souple, par opposition à la gouttière de l'art antérieur qui est rigide.

La souplesse induite par l'enveloppe de protection permet avantageusement de faciliter son positionnement à l'intérieur d'un boîtier pour dispositif lumineux.

L'enveloppe de protection de l'invention est plus particulièrement une enveloppe électriquement conductrice de type polymérique.

Dans la présente invention, on entend par l'expression « électriquement conducteur » ou « électriquement conductrice » une conductivité électrique d'au moins 1.10⁻⁸ S/m (siemens par mètre), de préférence d'au moins 1.10⁻⁶ S/m, et de préférence d'au moins 1.10⁻³ S/m, et de préférence d'au plus 1.10³ S/m (à 25°C).

Le dispositif lumineux de l'invention peut comprendre une ou plusieurs enveloppe(s) de protection selon l'invention. Lorsque le dispositif lumineux comprend au moins deux enveloppes de protection selon l'invention, la conductivité électrique de chaque enveloppe peut être différente.

La conductivité électrique de l'enveloppe de protection selon l'invention peut facilement être déterminée à l'aide d'un appareil permettant la mesure de conductivité électrique, tel que par exemple un appareil référencé AUTOSIGMA 3000, commercialisé par la société Sofranel.

L'enveloppe de protection peut être obtenue à partir d'une composition polymère comprenant au moins un polymère.

La composition polymère de l'invention peut comprendre un ou plusieurs polymère(s), le terme « polymère » pouvant s'entendre par tout type de polymère bien connu de l'homme du métier tel que homopolymère ou copolymère (e.g. copolymère séquencé, copolymère statistique, terpolymère, etc...).

Le polymère peut être du type thermoplastique ou élastomère, et peut être réticulé ou non, la réticulation étant réalisée par des techniques bien connues de l'homme du métier, telles que par exemple la réticulation peroxyde, la réticulation silane, la réticulation ultra-violet.

Selon une première variante, l'enveloppe de protection de l'invention peut être un matériau non réticulé, notamment du type thermoplastique ou élastomère.

Selon une deuxième variante, elle peut être un matériau réticulé, par des techniques bien connues de l'homme du métier.

Les propriétés électriques (i.e. conductivité électrique) de l'enveloppe de protection polymérique peuvent être obtenues selon des modes de réalisation différents.

Selon un premier mode de réalisation, l'enveloppe de protection peut être obtenue à partir d'une composition polymère comprenant au moins un polymère électriquement conducteur, et optionnellement au moins une charge.

Selon une première variante, les polymères électriquement conducteurs de l'invention peuvent être composés typiquement de macromolécules comprenant des liaisons π délocalisées au moins sur une partie ou sur tout le long de leurs chaines macromoléculaires (i.e. chaines principales ou « backbone chains » en anglais).

De préférence, les liaisons π délocalisées peuvent être du type π -σ- π, alternant des liaisons covalentes simples et multiples. Par exemple, on peut citer le système des doubles liaisons conjuguées, comme par exemple « -C=C-C=C- ».

Selon une deuxième variante, la conductivité électrique des polymères électriquement conducteurs de l'invention peut résulter en ce que leurs chaînes macromoléculaires acquièrent des charges positives ou négatives à travers l'oxydation ou la réduction de donneurs ou d'accepteurs d'électrons, pouvant être par exemple des éléments dopants.

Selon une troisième variante, la conductivité électrique des polymères électriquement conducteurs de l'invention peut résulter en ce que la charge citée ci-avant est transportée par dissolution des ions.

A titre d'exemple dans ce premier mode de réalisation, le polymère électriquement conducteur peut être choisi parmi les polyanilines, de préférence sous la forme d'éméraldine ; les polythiophènes ; les polypyrroles ; les polyacéthylènes ; et un de leurs mélanges. Comme référence commerciale, on peut citer la référence Panipol de la société Panipol Ltd, qui comprend une polyaniline; la référence Baytron P de la société Clevios, qui comprend un polythiophène et plus particulièrement un poly(3,4-éthylènedioxythiophène)-poly(styrène sulfonate) (PEDOT:PSS); ou la référence commerciale Conquest de la société Sigma-Aldrich, qui comprend un polypyrrole.

La charge optionnelle peut être tout type de charge bien connue de l'homme du métier, du type minérale ou organique.

La charge optionnelle peut être électriquement conductrice ou non.

La charge électriquement conductrice peut être choisie notamment parmi :
- des charges carbonées, telles que par exemple du noir de carbone, du graphite, du graphène, un polymorphe du carbone (e.g. diamant) ;
- des charges métalliques, telles que de l'aluminium, du magnésium, de l'argent, de l'or, du cuivre ;
- des métaux composites, tels que AlSiC (matrice aluminium comprenant des particules de carbure de silicium) ;
- des oxydes métalliques simples ou complexes, tels que Al₂O₃, Fe₂O₃, MgAl₂O₄, CoFe₂O₄, BaTiO₃, TiO₂ ;
- des nitrures métalliques ou de métalloïdes, tels que par exemple du nitrure de bore, du nitrure d'aluminium ; et
- un de leurs mélanges.

Le polymère électriquement conducteur pourra être introduit dans la composition polymère en une quantité suffisante pour rendre la composition électriquement conductrice.

Selon un deuxième mode de réalisation, l'enveloppe de protection peut être obtenue à partir d'une composition polymère comprenant au moins un polymère et au moins une charge électriquement conductrice.

Le polymère peut être tout type de polymère bien connu de l'homme du métier, du type organique tel que par exemple des polyoléfines, des polycarbonates, des polyamides ; ou inorganique tel que par exemple des polyorganosiloxanes.

Le polymère peut être un polymère électriquement conducteur ou non.

Plus particulièrement, le polymère peut être un polymère d'oléfine (i.e. polyoléfine), et de préférence un polymère d'éthylène et/ou de propylène. Un polymère d'oléfine est classiquement un polymère obtenu à partir d'au moins un monomère d'oléfine. A titre d'exemple, le polymère peut être choisi parmi un homopolymère d'éthylène, des copolymères d'éthylènes, et un de leurs mélanges.

La charge électriquement conductrice peut être tout type de charge bien connue de l'homme du métier, du type minérale ou organique.

La charge électriquement conductrice peut être choisie notamment parmi :
- des charges carbonées, telles que par exemple du noir de carbone, du graphite, du graphène, un polymorphe du carbone ;
- des charges métalliques, telles que de l'aluminium, du magnésium, de l'argent, de l'or, du cuivre ;
- des métaux composites, tels que AlSiC (matrice aluminium comprenant des particules de carbure de silicium) ;
- des oxydes métalliques simples ou complexes, tels que Al₂O₃, Fe₂O₃, MgAl₂O₄, CoFe₂O₄, BaTiO₃, TiO₂ ;
- des nitrures métalliques ou de métalloïdes de bore, tels que par exemple du nitrure de bore, du nitrure d'aluminium ; et
- un de leurs mélanges.

La charge électriquement conductrice pourra être introduite dans la composition polymère en une quantité suffisante pour rendre la composition électriquement conductrice, cette quantité pouvant notamment varier selon le type et la morphologie de charge électriquement conductrice sélectionnée.

A titre d'exemple dans ce deuxième mode de réalisation, on peut citer comme composition polymère comprenant au moins un polymère et au moins une charge électriquement conductrice, les produits électriquement conducteurs de la société Cool Polymers ou Celanese, tels que par exemple la référence commerciale CoolPoly RS1595, à base de polyamide (PA 6).

Selon un troisième mode de réalisation, l'enveloppe de protection peut être obtenue à partir d'une composition polymère comprenant au moins un polymère électriquement conducteur et au moins une charge électriquement conductrice, le polymère électriquement conducteur et la charge électriquement conductrice étant tels que définis dans le premier et le deuxième modes de réalisation.

Le polymère électriquement conducteur et la charge électriquement conductrice pourront être introduits dans la composition polymère en une quantité suffisante pour rendre la composition électriquement conductrice.

Dans un mode de réalisation particulier, la composition polymère de l'invention peut comprendre au moins 30 % en volume de polymère(s), et de préférence au moins 50 % en volume de polymère(s), par rapport au volume total de la composition polymère.

Elle peut également comprendre au plus 95 % en volume de polymère(s), et de préférence au plus 80% en volume de polymère(s), par rapport au volume total de la composition polymère.

La quantité en volume de polymère(s) dans la composition polymère représente la quantité totale de l'ensemble des polymères constitutifs de la composition polymère, que ces polymères soient électriquement conducteurs ou non.

Par ailleurs, la composition polymère de l'invention peut comprendre au moins 5 % en volume de charge(s), et de préférence au moins 20% en volume de charge(s), par rapport au volume total de la composition polymère.

Elle peut également comprendre au plus 70 % en volume de charge(s), et de préférence au plus 50% en volume de charge(s), par rapport au volume total de la composition polymère.

La quantité en volume de charge(s) dans la composition polymère, lorsque la composition polymère comprend au moins une charge, représente la quantité totale de l'ensemble des charges constitutives de la composition polymère, que ces charges soient électriquement conductrices ou non.

De préférence, la composition polymère de l'invention comprend au moins 95% en volume de polymère(s), ou au moins 95% en volume de polymère(s) et de charge(s), par rapport au volume total de la composition polymère.

La composition polymère de l'invention peut typiquement comprendre en outre des additifs en une quantité de 0,01 à 10 % en volume (inclusivement) par rapport au volume total de la composition polymère.

Les additifs sont bien connus de l'homme du métier et peuvent être par exemple choisis parmi :
- des agents de protection tels que des antioxydants ;
- des agents de mise en oeuvre, tels que des plastifiants, des lubrifiants, des huiles ;
- des agents de réticulation, tels que par exemple des peroxydes organiques ; et
- un de leurs mélanges.

### Le procédé de fabrication de l'enveloppe de protection

L'enveloppe de protection étant à base d'un matériau polymère, tout type de procédé bien connu de l'homme du métier dans le domaine de la formulation et de la mise en forme des polymères peut être utilisé.

A titre d'exemple de procédé de fabrication, on peut citer l'injection, le moulage, l'injection-moulage, le thermoformage ou l'extrusion.

Selon le premier mode de réalisation mentionné ci-avant, le procédé de fabrication préféré de l'invention est le moulage, l'injection-moulage ou le thermoformage, afin de pouvoir former facilement une enveloppe sous forme d'exosquelette.

Selon le deuxième mode de réalisation mentionné ci-avant, le procédé de fabrication préféré de l'invention est l'extrusion, afin de pouvoir former facilement une enveloppe sous forme de couche ou de gaine extrudée autour du ou des câbles électriques.

Lorsque la composition polymère de l'invention comprend au moins une charge, ladite charge est de préférence incorporée dans le polymère à l'état malléable ou fondu afin d'obtenir un mélange final homogène entre le polymère et la charge.

Lorsque la composition polymère comprend un agent de réticulation, tel que par exemple un peroxyde organique, afin d'obtenir une enveloppe de protection dite réticulée, l'agent de réticulation est mélangé tout d'abord à la composition polymère à une température suffisante pour rendre le polymère malléable ou en fusion mais inférieure à la température de décomposition dudit peroxyde organique. Puis, une fois la composition mise en forme, elle peut être réticulée à une température suffisante pour déclencher la décomposition du peroxyde et ainsi permettre la réticulation de la composition polymère.

### Le dispositif lumineux de véhicule automobile

La présente invention s'applique de préférence aux domaines des dispositifs lumineux de véhicule automobile.

Plus particulièrement, le dispositif lumineux de véhicule automobile peut être un dispositif d'éclairage et/ou de signalisation lumineuse. A titre d'exemple, le dispositif d'éclairage peut être un projecteur avant de véhicule automobile ou un dispositif d'éclairage intérieur de véhicule automobile, et le dispositif de signalisation lumineuse peut être un feu arrière de véhicule automobile. De façon plus particulière, on peut également citer comme exemple de dispositif lumineux un feu de route, un feu de croisement, un feu de signalisation diurne, une lanterne, un feu stop, un indicateur de direction, un feu antibrouillard, etc.

Le dispositif lumineux de véhicule automobile peut comprendre au moins un module lumineux.

Plus particulièrement, ledit module lumineux est apte à émettre un faisceau lumineux, et peut être une unité d'éclairage comprenant au moins une source lumineuse. La source lumineuse peut comprendre une ou plusieurs élément(s) photoémissive(s) à semi-conducteur.

Dans un mode de réalisation particulier, le module lumineux est apte à émettre un faisceau lumineux pour réaliser tout ou partie d'une fonction d'éclairage et/ou de signalisation lumineuse, pour véhicule automobile.

Le module lumineux peut en outre comprendre un dissipateur thermique, tel qu'un radiateur, et une carte de circuit imprimé, notamment du type PCB (« *Printed Circuit Board* »), et/ou une carte de circuit imprimé flexible, notamment du type FPCB (« *Flexible Printed Circuit Board* »), et/ou un dispositif d'interconnexion à géométrie variable, notamment du type MID *(« Molded In Device* »), ces types de configuration étant bien connue de l'homme du métier.

Le module lumineux du dispositif lumineux selon l'invention est destiné à être connecté, ou est connecté, à au moins un câble électrique conforme à l'invention. La connexion peut être réalisée classiquement par l'intermédiaire d'au moins un connecteur électrique.

Le dispositif lumineux selon l'invention peut comprendre en outre un boîtier pour dispositif lumineux, et notamment pour projecteur automobile, avec une surface interne, et au moins un moyen de maintien de l'enveloppe de protection sur la surface interne dudit boîtier. Ledit boîtier permet de recevoir ledit câble électrique entouré par son enveloppe de protection.

Le moyen de maintien peut être par exemple un collier de serrage, un clip ou une vis.

D'autres caractéristiques et avantages de la présente invention apparaîtront à la lumière de la description d'exemples non limitatifs de dispositifs lumineux selon l'invention, faits en référence aux figures.
La figure 1 représente une vue d'ensemble d'un dispositif lumineux de véhicule automobile, sans enveloppe de protection.
La figure 2 représente une vue schématique d'une enveloppe de protection du type exosquelette selon l'invention.
La figure 3 représente une vue d'ensemble d'un dispositif lumineux de véhicule automobile selon la figure 1 comprenant l'enveloppe de protection de la figure 2.
La figure 4 représente une vue schématique d'un faisceau de câbles électriques entouré en partie par une enveloppe de protection du type gaine selon l'invention.
La figure 5 représente une vue d'ensemble d'un dispositif lumineux de véhicule automobile comprenant le faisceau de câbles électriques entouré en partie par une enveloppe de protection du type gaine de la figure 4.

Pour des raisons de clarté, seuls les éléments essentiels pour la compréhension de l'invention ont été représentés de manière schématique, et ceci sans respect de l'échelle.

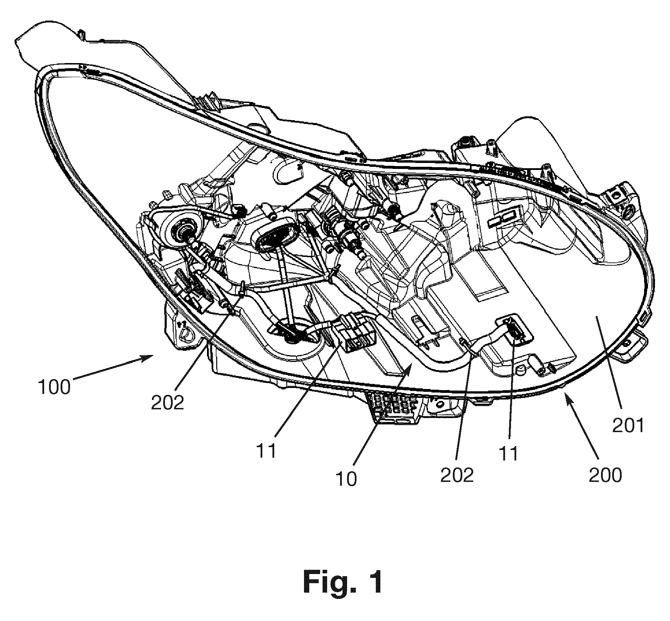

La figure 1 représente une vue schématique d'un dispositif lumineux 100 de véhicule automobile ne comprenant pas d'enveloppe de protection telle que définie dans la présente invention.

Le dispositif lumineux 100 comprend un boîtier 200 pour projecteur automobile avec une surface interne 201, et un faisceau 10 de câbles électriques positionné sur la surface interne du boîtier 200, ledit faisceau 10 de câbles électriques comprenant des connecteurs électriques 11. Au moins un de ces connecteurs électriques 11 est destiné à être connecté à au moins un module lumineux (non représenté).

Le faisceau 10 de câbles électriques est fixé sur la surface interne 201 du boîtier à l'aide de moyens de maintien 202.

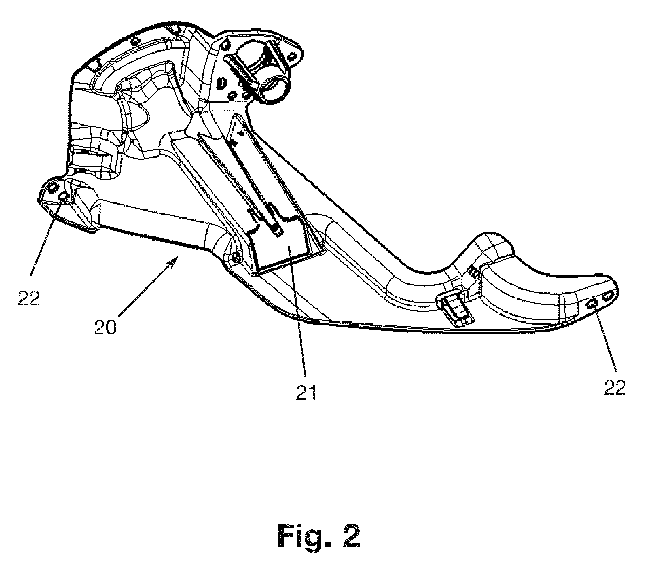

La figure 2 représente une vue schématique d'une enveloppe de protection du type exosquelette 20 selon l'invention.

Cet exosquelette 20 est une enveloppe polymérique électriquement conductrice conforme à l'invention, réalisée par moulage ou injection moulage. Il est destiné à protéger électriquement et mécaniquement au moins en partie le faisceau 10 de câbles électriques positionné sur la surface interne 201 du boîtier, représenté sur la figure 1.

L'exosquelette 20 est en matériau polymère non réticulé et est électriquement conducteur. Il peut être obtenu à partir d'une composition polymère électriquement conductrice, commercialisée par la société Cool Polymers sous la référence CoolPoly RS1595, à base de polyamide (PA6).

L'exosquelette 20 comprend au moins une première ouverture 21 destinée à laisser passer au moins un connecteur électrique 11 du faisceau de câbles électriques.

Il comprend en outre des deuxièmes ouvertures 22 destinées à permettre la fixation dudit exosquelette sur la surface interne 201 du boîtier 200 pour dispositif lumineux, et ainsi former une enveloppe fermée autour du faisceau 10 de câbles électriques.

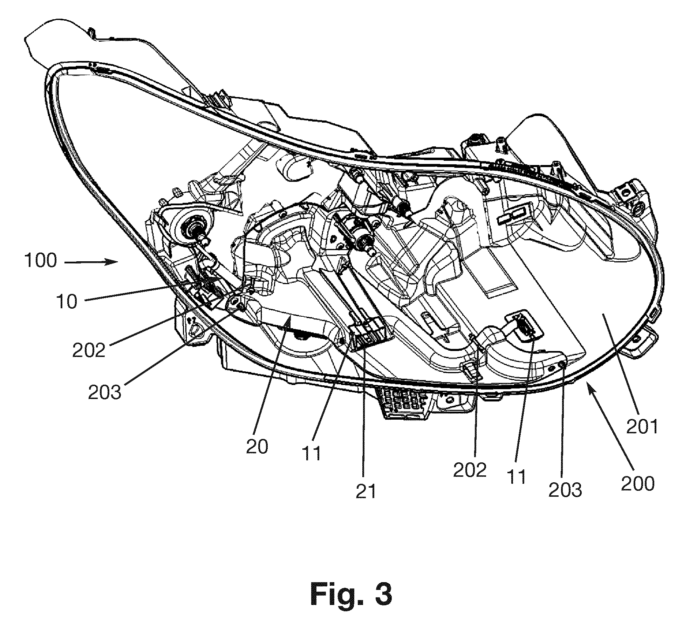

La figure 3 représente une vue schématique du dispositif lumineux 100 de la figure 1, comprenant en outre l'exosquelette 20 de la figure 2 fixé sur la surface interne 201 du boîtier pour projecteur automobile. De ce fait, l'exosquelette 20 recouvre au moins une portion longitudinale le faisceau 10 de câbles électriques.

Au moins un des connecteurs 11 est positionné dans la première ouverture 21 et des moyens de maintien, tels que par exemple des vis 203, sont insérés dans les deuxièmes ouvertures 22 pour fixer l'exosquelette 20 sur la surface interne 201 du boîtier 200.

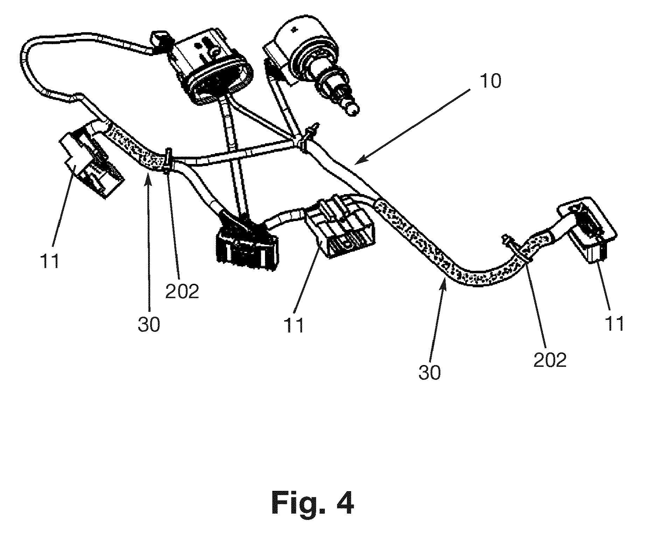

La figure 4 représente une vue schématique d'un faisceau 10 de câbles électriques comprenant des connecteurs 11, ledit faisceau 10 étant entouré en partie par une enveloppe de protection du type gaine 30 selon l'invention.

Le faisceau 10 de câbles électriques est entouré complètement (en section transversale) par ladite gaine 30 sur deux portions longitudinales du faisceau 10 de câbles électriques.

Cette gaine 30 est une enveloppe polymérique électriquement conductrice conforme à l'invention, réalisée par extrusion. Elle est destinée à protéger électriquement et mécaniquement au moins en partie le faisceau 10 de câbles électriques, ledit faisceau étant destiné à être positionné sur la surface interne d'un boîtier pour projecteur automobile.

La gaine 30 est en matériau polymère non réticulé et est électriquement conductrice. Elle peut être obtenue à partir d'une composition polymère électriquement conductrice, commercialisée par la société Cool Polymers sous la référence CoolPoly RS1595, à base de polyamide (PA6).

La gaine 30 peut être maintenue sur la surface interne d'un boîtier pour projecteur automobile par des moyens de maintien 202, tel que par exemple du type collier de serrage.

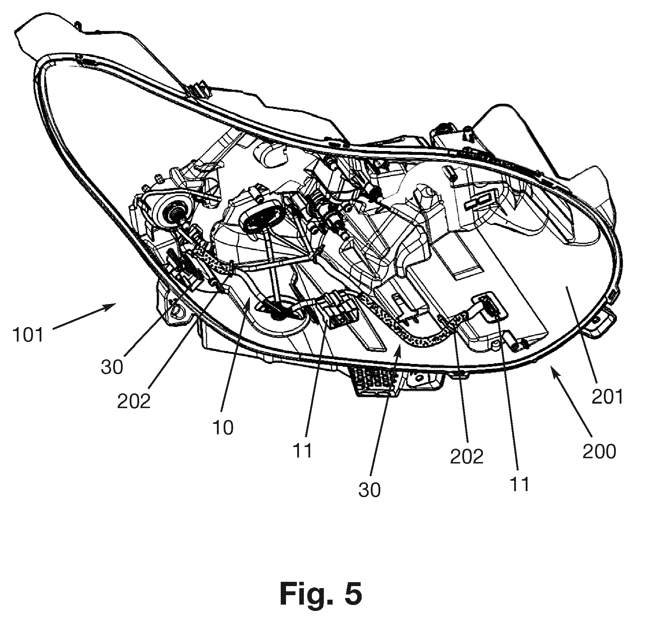

La figure 5 représente une vue schématique d'un dispositif lumineux 101 de véhicule automobile comprenant le faisceau 10 de câbles électriques entouré en partie par la gaine 30, tel que représenté sur la figure 4.

Le faisceau 10 de câbles électriques entouré en partie par la gaine 30 est fixé sur la surface interne 201 du boîtier pour projecteur automobile, à l'aide d'un moyen de maintien du type collier de serrage 202.

## Revendications

1. Dispositif lumineux (100, 101) de véhicule automobile comprenant au moins un module lumineux et au moins un câble électrique (10), **caractérisé en ce qu'**au moins une portion longitudinale dudit câble électrique (10) est entourée au moins en partie par au moins une enveloppe de protection (20, 30), l'enveloppe de protection étant une enveloppe polymérique électriquement conductrice.

2. Dispositif lumineux selon la revendication 1, **caractérisé en ce qu'**au moins une portion longitudinale dudit câble électrique (10) est entourée complètement par au moins une enveloppe de protection (20, 30).

3. Dispositif lumineux selon la revendication 1 ou 2, **caractérisé en ce qu'**il comprend au moins deux câbles électriques formant un ensemble de câbles électriques, au moins une portion longitudinale dudit ensemble étant entourée par ladite enveloppe de protection (20, 30).

4. Dispositif lumineux selon l'une quelconque des revendications précédentes, **caractérisé en ce qu'**il comprend au moins un faisceau de câbles électriques, au moins une portion longitudinale dudit faisceau étant entourée par ladite enveloppe de protection (20, 30).

5. Dispositif lumineux selon l'une quelconque des revendications précédentes, **caractérisé en ce qu'**il comprend au moins deux faisceaux de câbles électriques formant un ensemble de faisceaux, au moins une portion longitudinale dudit ensemble de faisceaux étant entourée par ladite enveloppe de protection (20, 30).

6. Dispositif lumineux selon l'une quelconque des revendications précédentes, **caractérisé en ce que** l'enveloppe de protection est un exosquelette (20).

7. Dispositif lumineux selon l'une quelconque des revendications 1 à 5, **caractérisé en ce que** l'enveloppe de protection est une gaine (30).

8. Dispositif lumineux selon l'une quelconque des revendications précédentes, **caractérisé en ce que** la conductivité électrique de l'enveloppe de protection (20, 30) est d'au moins 1.10⁻⁸ S/m (siemens par mètre) (25°C).

9. Dispositif lumineux selon l'une quelconque des revendications précédentes, **caractérisé en ce que** l'enveloppe de protection (20, 30) est obtenue à partir d'une composition polymère comprenant au moins un polymère électriquement conducteur, et optionnellement au moins une charge.

10. Dispositif lumineux selon l'une quelconque des revendications 1 à 9, **caractérisé en ce que** l'enveloppe de protection (20, 30) est obtenue à partir d'une composition polymère comprenant au moins un polymère et au moins une charge électriquement conductrice.

11. Dispositif lumineux selon la revendication 9 ou 10, **caractérisé en ce que** la composition polymère comprend au moins 30 % en volume de polymère(s) par rapport au volume total de la composition polymère.

12. Dispositif lumineux selon l'une quelconque des revendications 9 à 11, **caractérisé en ce que** la composition polymère comprend au moins 5 % en volume de charge(s) par rapport au volume total de la composition polymère.

13. Dispositif lumineux selon l'une quelconque des revendications précédentes, **caractérisé en ce qu'**il comprend un boîtier (200) pour projecteur automobile avec une surface interne (201), et au moins un moyen de maintien (202, 203) de l'enveloppe de protection (20, 30) sur la surface interne (201) dudit boîtier.
